(19) Europäisches Patentamt
European Patent Office
Office européen des brevets

(11) **EP 3 894 802 B1**

(12) **EUROPÄISCHE PATENTSCHRIFT**

(45) Veröffentlichungstag und Bekanntmachung des Hinweises auf die Patenterteilung:
**10.07.2024   Patentblatt 2024/28**

(21) Anmeldenummer: **19802149.5**

(22) Anmeldetag: **11.11.2019**

(51) Internationale Patentklassifikation (IPC):
**G01F 1/84** (2006.01)

(52) Gemeinsame Patentklassifikation (CPC):
**G01F 1/8436**

(86) Internationale Anmeldenummer:
**PCT/EP2019/080823**

(87) Internationale Veröffentlichungsnummer:
**WO 2020/120048 (18.06.2020 Gazette 2020/25)**

(54) **VERFAHREN ZUM ÜBERWACHEN DES ZUSTANDS EINES MESSAUFNEHMERS**

METHOD FOR MONITORING THE CONDITION OF A MEASUREMENT SENSOR

PROCÉDÉ POUR SURVEILLER L'ÉTAT D'UN CAPTEUR DE MESURE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **11.12.2018   DE 102018131686**

(43) Veröffentlichungstag der Anmeldung:
**20.10.2021   Patentblatt 2021/42**

(73) Patentinhaber: **Endress + Hauser Flowtec AG**
**4153 Reinach (CH)**

(72) Erfinder: **ANKLIN, Martin Josef**
**4143 Dornach (CH)**

(74) Vertreter: **Hahn, Christian et al**
**Endress+Hauser Group Services**
**(Deutschland)AG +Co. KG**
**Colmarer Straße 6**
**79576 Weil am Rhein (DE)**

(56) Entgegenhaltungen:
**EP-A1- 2 286 189**        **EP-A1- 2 351 996**
**EP-B1- 2 286 189**        **EP-B1- 2 351 996**
**WO-A1-01/67052**        **DE-A1- 102015 115 499**
**DE-B4- 102015 115 499**        **DE-T2- 60 218 050**
**US-A1- 2007 028 663**        **US-A1- 2013 160 565**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die vorliegende Erfindung betrifft ein Verfahren zum Überwachen eines Zustands eines in einer Messstelle installierten Messaufnehmers zum Erfassen der Dichte und / oder des Massedurchflusses eines Mediums mit mindestens einem zu Vibrationsschwingungen angeregten Oszillator, der mindestens ein Messrohr zum Führen des Mediums aufweist, wobei ein den Zustand charakterisierender Zustandsparameter von mindestens einem weiteren Parameter des im Messrohr geführten Mediums bzw. des Oszillators abhängt. US 2007 / 028663 A1 und DE 602 18 050 T2 offenbaren Verfahren zum Überwachen eines Zustands eines Messaufnehmers, bei denen eine vom Messgerät ermittelte Mediendichte mit einem Referenzwert verglichen wird. Ein gattungsgemäßes Verfahren ist beispielsweise offenbart in WO 03 / 029760 A1, DE 10 2011 086 395 A1 und WO 2013 072 164 A1.

Ein geeigneter Parameter zur Zustandsüberwachung kann unter anderem die Breite der Resonanzkure um eine Biegeschwingungsnutzmode des Oszillators oder eine dazu äquivalente Größe sein, wie das Schwingungsamplitudenverhältnis zwischen der Schwingung des Oszillators bei der Resonanzfrequenz der Biegeschwingungsnutzmode und bei einer um einen Faktor abweichenden Frequenz.

Um einem Parameter sinnvoll für Überwachungszwecke nutzen zu können, sollte der Parameter erstens sensitiv sein, um relevante Zustandsänderungen rechtzeitig zu erkennen und zweitens hinreichend spezifisch, um Fehlalarme ausschließen zu können.

Es ist die Aufgabe der vorliegenden Erfindung, gattungsgemäße Verfahren in diesem Sinne weiterzubilden.

Die Aufgabe wird erfindungsgemäß gelöst, durch das Verfahren gemäß dem unabhängigen Patentanspruch 1.

Das erfindungsgemäße Verfahren dient zum Überwachen eines Zustands eines in einer Messstelle installierten Messaufnehmers zum Erfassen der Dichte und/oder des Massedurchflusses eines Mediums mit mindestens einem zu Vibrationsschwingungen angeregten Oszillator, der mindestens ein Messrohr zum Führen des Mediums aufweist, wobei ein den Zustand charakterisierender Zustandsparameter von mindestens einem weiteren physikalischen Parameter des im Messrohr geführten Mediums bzw. des Oszillators abhängt; wobei das Verfahren die folgenden Schritte aufweist:

Ermitteln von Tupeln die einen Wert des mindestens einen physikalischen Parameters und einen zugehörigen Wert des Zustandsparameters enthalten;

Zuordnen der Tupel zu jeweils einem Wertebereich des mindestens einen physikalischen Parameters; und

Bilden eines Referenzwerts des Zustandsparameters für diesen Wertebereich des mindestens einen physikalischen Parameters unter Verwendung des Werts des Zustandsparameters des Tupels, wenn noch kein gültiger Referenzwert des Zustandsparameters für diesen Wertebereich vorliegt; oder

Vergleichen des Werts des Zustandsparameters des Tupels mit dem Referenzwert, wenn ein Referenzwert des Zustandsparameters für diesen Wertebereich vorliegt; und Generieren eines Befunds in Abhängigkeit vom Ergebnis des Vergleichs.

Der Zustandsparameter hängt von mindestens drei physikalischen Parametern des im Messrohr geführten Mediums ab, insbesondere der Temperatur, der Dichte und dem Druck des Mediums, wobei erfindungsgemäß die ermittelten Tupel jeweils aktuelle Werte von mindestens zwei der physikalischen Parameter und einen zugehörigen aktuellen Wert des Zustandsparameters umfassen; wobei die Tupel einem Feld in einer Wertebereichmatrix mindestens zwei der physikalischen Parameter, insbesondere Dichte und Temperatur zugeordnet werden; wobei das Bilden des Referenzwerts des Zustandsparameters für dieses Feld der Wertebereichmatrix erfolgt, wenn noch kein gültiger Referenzwert des Zustandsparameters für dieses Feld vorliegt; wobei das Vergleichen des Werts des Zustandsparameters des Tupels mit dem Referenzwert erfolgt, wenn ein Referenzwert des Zustandsparameters für dieses Feld vorliegt.

Erfindungsgemäß geht ein Verhältnis einer Schwingungsamplitude des Oszillators zu einem Erregersignal zum Anregen der Schwingungen des Oszillators bei mindestens einer Überwachungsfrequenz in die Bestimmung des Zustandsparameters ein, wobei das Verhältnis zwischen der Überwachungsfrequenz und einer aktuellen Resonanzfrequenz des Oszillators, insbesondere der Resonanzfrequenz einer Biegeschwingungsnutzmode durch einen konstanten Faktor gegeben.

Der obige Befund kann beispielsweise die Feststellung eines Fehlerzustands sein, wenn der Vergleich eine signifikante Abweichung zum Referenzwert ergibt. Ein solcher Fehlerzustand kann in einer Weiterbildung der Erfindung signalisiert werden, ggf. in Eskalationsstufen, die vom Grad der Abweichung abhängen.

Sofern der Zustandsparameter von mindestens drei physikalischen Parametern des im Messrohr geführten Mediums abhängt, insbesondere der Temperatur, der Dichte und dem Druck des Mediums, umfassen die ermittelten Tupel gemäß einer Weiterbildung der Erfindung jeweils aktuelle Werte mindestens der drei physikalischen Parameter und einen zugehörigen aktuellen Wert des Zustandsparameters; wobei die Tupel einem Feld in einer mindestens dreidimensionalen Wertebereichmatrix der mindestens drei physikalischen Parameter zugeordnet werden.

In einer Weiterbildung der Erfindung entsprechen die gültigen Referenzwerte des Zustandsparameters für jeweils einen Wertebereich bzw. ein Feld der Wertebereichmatrix, dem ersten erfassten Wert des Zustandsparameters für diesen Wertebereich bzw. dieses Feld.

In einer Weiterbildung der Erfindung werden die gültigen Referenzwerte des Zustandsparameters für jeweils einen Wertebereich bzw. ein Feld der Wertebereichmatrix, durch Mittelung über N erste Werte des Zustandsparameters für diesen Wertebereich bzw. dieses Feld gebildet. In einer Ausgestaltung dieser Weiterbildung der Erfindung wird neben dem Referenzwert jeweils ein Maß für die Streuung der ersten N Werte des Zustandsparameters erfasst, beispielsweise dessen Standardabweichung, wobei zum Generieren eines Befunds in Abhängigkeit vom Ergebnis des Vergleichs eine Abweichung des aktuellen Werts des Zustandsparameters von dem Referenzwert mit der Streuung, insbesondere der Standardabweichung verglichen wird.

Gemäß einer Weiterbildung der Erfindung überdecken die Wertebereiche für die Temperatur jeweils nicht weniger als 5 K, insbesondere nicht weniger als 10 K überdecken.

Gemäß einer Weiterbildung der Erfindung überdecken die Wertebereiche für die Dichte des Mediums jeweils nicht weniger als 50 kg / m$^3$, insbesondere nicht weniger als 100 kg / m$^3$.

Gemäß einer Weiterbildung der Erfindung überdecken die Wertebereiche für den Druck des Mediums jeweils nicht weniger als 0,5 MPa insbesondere nicht weniger als 1 MPa.

Gemäß einer Weiterbildung der Erfindung ist der Zustandsparameter dazu eingerichtet, auf Ansatzbildung, Abrasion, und oder Korrosion im Messrohr zu reagieren.

Gemäß einer Weiterbildung der Erfindung hängt der mindestens eine Zustandsparameter von der Güte des mindestens einen Oszillators ab.

Gemäß einer Weiterbildung der Erfindung hängt der mindestens eine Zustandsparameter von mindestens einer modalen Biegesteifigkeit des mindestens einen Oszillators ab.

Gemäß einer Weiterbildung der Erfindung ist der Zustandsparameter von der Linienbreite einer Biegeschwingungsmode des Oszillators insbesondere der Biegeschwingungsnutzmode Oszillators bzw. der Funktion $d\omega/d\varphi$ abhängig, wobei $\varphi$ die Phasendifferenz zwischen Anregungssignal und Schwingungsamplitude des Oszillators ist.

Das Bilden eines Referenzwerts des Zustandsparameters für einen Wertebereich bzw. für ein Feld einer Wertebereichsmatrix setzt mindestens ein zugeordnetes Tupel voraus. Die Tupel von Zustands- und physikalischen Parametern werden vorzugsweise fortlaufend oder periodisch durch Messung ermittelt. Es kann jedoch vorkommen, dass bestimmte Wertebereiche bzw. Felder der Wertebereichmatrix über einen längeren Zeitraum nach der Inbetriebnahme einer Messstelle zunächst nicht vorkommen. Dann können dafür keine Referenzwerte auf Basis direkter Messung gewonnen werden. Wenn aber Referenzwerte in diesem Fall für angrenzende Wertebereiche bzw. angrenzende Felder der Wertebereichmatrix vorliegen, kann gemäß einer Weiterbildung der Erfindung der fehlende Referenzwert durch Interpolation bzw. Extrapolation bestimmt werden. Die Inter-bzw. Extrapolation kann im einfachsten Fall linear erfolgen. Gleichermaßen kann gemäß einer Ausgestaltung dieser Weiterbildung der Erfindung modellbasiert ein nicht-linearer Fit der Referenzwerte an den bzw. die physikalischen Parameter erfolgen. Sofern bereits ein valides Modell für die Referenzwerte in Abhängigkeit von den physikalischen Parametern an einer Messstelle besteht, wird gemäß einer Weiterbildung der Erfindung ein neu beobachteter Referenzwert, der in Abhängigkeit von den physikalischen Parametern in einem neuen Wertebereich bzw. Feld der Wertebereichmatrix erfasst wird, auf seine Plausibilität überprüft, beispielsweise durch Vergleich mit einem modellbasierten Erwartungswert für den Referenzwert.

Neben der Ermittlung der Referenzwerte, sind zur Durchführung des Verfahrens noch Kriterien zu etablieren, welche bei dem Vergleich festgestellten Abweichungen zu welchem Befund führen. Insbesondere also, ab welcher Abweichung vom Referenzwert ein Fehlerzustand festzustellen und ggf. zu signalisieren ist. Hier gibt es eine Vielfalt von Ansätzen.

Insofern, als Messstellenbetreiber die Anforderungen an eine Messstelle sehr spezifisch definieren können, ist es vorteilhaft, wenn sie die Grenzwerte für das Feststellen einer signifikanten Abweichung definieren und anpassen können. Weiterhin können beispielsweise jeweils das Vielfache der Standardabweichung eines Referenzwerts, beispielsweise das Zweifache oder Dreifache, oder ein Prozentsatz des Referenzwerts beispielsweise 8%, 4%, 2% oder 1% als Grenzwert dienen. Sofern Referenzwerte durch Inter- bzw. Extrapolation ermittelt sind, ist es vorteilhaft, wenn die Grenzwerte für Abweichungen von extrapolierten Referenzwerten größer bemessen sind als die Grenzwerte von Abweichungen für interpolierte Referenzwerte.

Die Erfindung wird dem Umstand gerecht, dass die in Rede stehenden Messaufnehmer einerseits in unterschiedlichsten Messstellen eingesetzt werden, an denen nur bedingt vergleichbare Werte für den Zustandsparameter bzw. die physikalischen Parameter auftreten, und dass andererseits an einer konkreten Messstelle die Bedingungen vergleichsweise stabil sind. Damit können messstellenspezifische Referenzwerte ermittelt werden, die es ermöglichen bereits geringen Abweichungen eine Bedeutung beizumessen. Nach Bayes gilt für die Wahrscheinlichkeit P(A|B) eines Ereignis A, wenn ein Ereignis B eingetreten ist, der folgende Zusammenhang:

$$P(A|B) = P(B|A) * P(A) / P(B).$$

Darin beschreibt der Ausdruck P(B|A) die Wahrscheinlichkeit eines Ereignis B, wenn ein Ereignis A eingetreten ist, wobei P(A) und P(B) die globalen Wahrscheinlichkeit angeben, dass unabhängig von einer Beobachtung überhaupt die Ereignisse A bzw. B eintreten. Wenn das Ereignis A beispielsweise das tatsächliche Auftreten eines Fehlerzustands ist, und B das Auftreten einer signifikanten Veränderung des zusätzlichen Parameters, dann wird durch die obige Bildung der Referenzgrößen erreicht, dass einerseits die Sensitivität P(B|A) für die Detektion des Ereignisses A erhöht wird, festgelegt werden können, und dass andererseits die Selektivität gesteigert wird, da Referenzwerte und ggf. Grenzwerte an einer spezifischen Messstelle bestimmt werden, wodurch für die Messstelle die globale Wahrscheinlichkeit P(B) abnimmt. Beide Aspekte führen zu einem gesteigerten Wert für die Wahrscheinlichkeit P(A|B). D.h., die Vertrauenswürdigkeit der Meldung eines Fehlerzustands A aufgrund des Eintretens von B nimmt zu. Durch Ermitteln messstellenspezifischer Referenzgrößen in Abhängigkeit von Randbedingungen, wie der Temperatur, dem Druck, oder der Mediendichte, kann sowohl die Sensitivität, als auch die Selektivität noch weiter gesteigert werden.

Die Erfindung wird nun anhand der in den Zeichnungen dargestellten Ausführungsbeispiele erläutert. Es zeigt:

    Fig. 1.: Ein Ausführungsbeispiel einer Messstelle zur Durchführung des erfindungsgemäßen Verfahrens;

    Fig. 2a: Resonanzkurven eines Oszillators zur Veranschaulichung eines Ausführungsbeispiels eines Zustandsparameters;

    Fig. 2b:Werte zur Abweichung des Zustandsparameters aus Fig. 2a als Funktion der Anregungsfrequenz bei zwei verschiedenen Güten des Oszillators;

    Fig. 2c: Werte zur Abweichung des Zustandsparameters aus Fig. 2a als Funktion der Güte bei drei verschiedenen Referenzgüten;

    Fig. 3: Ein exemplarisches Diagramm einer Wertebereichsmatrix eines Zustandsparameters als Funktion der Dichte und der Temperatur; und

    Fig. 4: Ein Flussdiagramm eines Ausführungsbeispiels des erfindungsgemäßen Verfahrens.

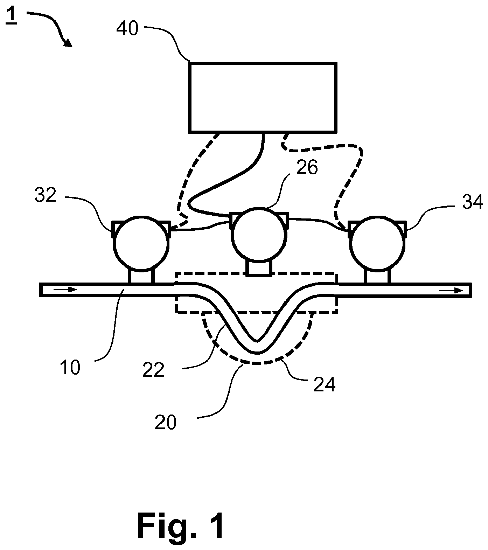

Das in Fig. 1 dargestellte Beispiel einer Messstelle 1 zum Durchführen des erfindungsgemäßen Verfahrens ist in einer Rohrleitung 10 angeordnet, in welcher ein Medium, strömt. Die Messstelle 1 umfasst einen Coriolis-Massedurchflussmessaufnehmer 20, der dazu eingerichtet ist, neben Massedurchflussraten auch die Dichte eines Mediums zu erfassen. Ein solcher Coriolis-Massedurchflussmessaufnehmer 20 wird beispielsweise unter der Bezeichnung Promass F, Promass Q oder Promass X von der Anmelderin hergestellt. Der Coriolis-Massedurchflussmessaufnehmer 20 umfasst mindestens einen Oszillator 22 der in einem Gehäuse 24 zwei gebogene, parallel geführte Messrohre umfasst, die zu Biegeschwingungen angeregt werden können. Aus dem Schwingungsverhalten der Messrohre können in an sich bekannter Weise der Massedurchfluss, die Dichte und die Viskosität des Mediums bestimmt werden.

Der Durchflussmessaufnehmer 20 ist in der Zeichnung mit waagerechter Strömungsrichtung und nach unten verlaufendem Messrohrbogen dargestellt. Selbstverständlich, kann der Messrohrbogen zwecks verbesserter Entleerbarkeit auch nach oben verlaufen. Gleichermaßen kann der Durchflussmessaufnehmer auch mit senkrecht verlaufender Strömungsrichtung angeordnet sein. Die Messstelle 1 umfasst weiterhin zwei Druckmessumformer 32 und 34 wobei der Coriolis-Massedurchflussmessaufnehmer 22 zwischen den Druckmessumformern angeordnet ist. Der Druck des Mediums im Coriolis-Massedurchflussmessaufnehmer ergibt sich im Wesentlichen als Mittelwert der Messwerte der beiden Druckmessumformer. Insofern, als der Coriolis-Massedurchflussmessaufnehmer einen verengten Strömungsquerschnitt gegenüber der Rohrleitung aufweist, bildet er eine Drossel zwischen den beiden Druckmessumformern 32, 34, so dass aus der Differenz zwischen deren Druckmesswerten dann die Viskosität des Mediums ermittelt werden kann, da über die Massedurchflussrate und die Dichte des Mediums auch die Strömungsgeschwindigkeit bekannt ist. Die Drucksensoren der Druckmessumformer können Absolut- oder Relativdrucksensoren sein. Die vorliegende Erfindung stellt hierzu keine spezifischen Anforderungen da der für die Messstelle zulässige Druckbereich in relativ grobe Druckstufen eingeteilt ist, und die Druckmessung im Wesentlichen dazu dient, festzustellen in welchem Druckbereich sich die Messstelle gerade befindet. Anstelle der beiden Druckmessumformer kann auch ein einziger Druckmessumformer eingesetzt werden, beispielsweise ein einlaufseitiger Druckmessumformer 32, wobei in diesem Fall der in den Messrohren herrschende Druck anhand eines Druckmesswerts, und anderer Medienparameter ermittelt werden kann, wie beispielsweise in der Offenleggungsschrift DE 10 2010 000 759 A1 offenbart ist. Die Druckmesswerte des einen Druckmessumformers oder beider Druckmessumformer werden zum Coriolis-Massedurchflussmessaufnehmer und/oder zu einer übergeordneten Einheit 240 übertragen.

Der Coriolis-Massedurchflussmessaufnehmer 20 umfasst weiterhin mindestens einen hier nicht dargestellten Temperatursensor zum Erfassen eines Temperaturmesswerts, der für die Temperatur des Mediums bzw. die Temperatur der Messrohre des Oszillators charakteristisch ist.

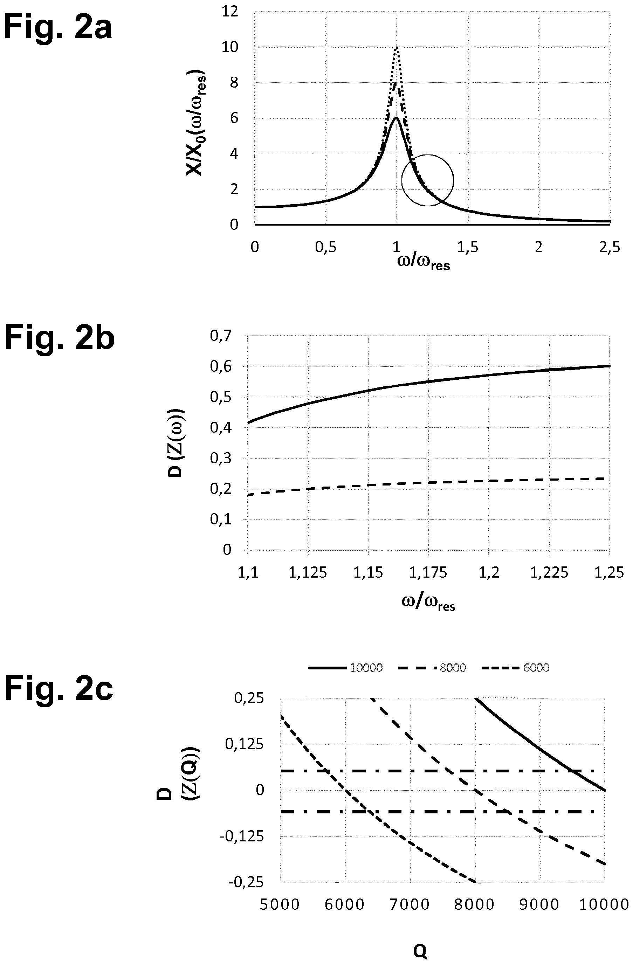

Der Coriolis-Massedurchflussmessaufnehmer 20 umfasst weiterhin eine Mess- und Betriebsschaltung 26, die zumindest dazu eingerichtet ist, den Durchflussmessaufnehmer 20 zu betreiben, Messwerte für den Massedurchfluss und ggf. der Dichte zu ermitteln, und die ermittelten Messwerte an die übergeordnete Einheit 240 auszugeben. Weiterhin ist die Mess- und Betriebsschaltung 26, oder ggf. in Kombination mit der übergeordneten Einheit 240, dazu eingerichtet das erfindungsgemäße Verfahren auszuführen. D.h. zunächst Referenzwerte von mindestens einem Zustandsparameter verschiedene Wertebereiche bzw. Felder einer Wertebereichmatrix zu sammeln, und danach auftretende Werte des Zustandsparameters, mit den referenzwerten zu vergleichen. Ein Beispiel für einen Zustandsparameter wird im Folgenden anhand Fign. 2a-c erläutert.

Fig 2a zeigt Resonanzkurven eines Oszillators als Funktion des Quotienten von Erregerkreisfrequenz und Resonanzkreisfrequenz $\omega/\omega_{res}$, wobei $X/X_0 := X(\omega/\omega_0) / X(0)$ das Verhältnis zwischen der kreisfrequenzabhängigen Amplitude und der Amplitude im statischen Grenzfall bezeichnet. Die Resonanzkurven sind hier zu Illustrationszwecken für extrem niedrige Güten Q mit Werten von 10, 8 und 6 dargestellt. Die Oszillatoren von Coriolis-Massedurchflussmessaufnehmern weisen tatsächlich Güten von 1000 bis 10000 auf, was mit wesentlich schmaleren und höheren Resonanzmaxima einher geht. Die Amplitude bei der Resonanzkreisfrequenz $\omega_{res}$ ist proportional zur Güte Q eines Oszillators, wobei der Einfluss der Güte auf die Amplitude oberhalb der Resonanz schnell an Bedeutung verliert und bereits in dem eingekreisten Bereich in Fig. 2a für den gilt $1,1 < \omega/\omega_{res} < 1,3$ weitgehend vernachlässigbar ist. Damit ist das Verhältnis der Amplitude im Resonanzfall $\omega/\omega_{res} = 1$ zur Amplitude bei beispielsweise $\omega/\omega_{res} = 1,15$ proportional zur Güte und unabhängig von der Amplitude einer periodischen Erregerkraft, mit welcher der Oszillator angeregt wird.

Ein geeigneter Zustandsparameter Z zur Überwachung des Oszillatorzustands wäre demnach $Z = X(\omega/\omega_{res}) / X(1)$ bei einem definierten Kreisfrequenzverhältnis im Bereich von beispielsweise $1,1 < \omega/\omega_{res} < 1,3$. Zum Bewerten des Zustands kann dann eine Abweichungsfunktion D(Z) gebildet werden, beispielsweise

$$D(Z) := (Z-Z_{ref}) / Z_{ref} = Z / Z_{ref} - 1.$$

Fig. 2b zeigt Kurven eine Funktion $D(Z(\omega))$, welche mit den obigen Definitionen gegeben ist als:

$$D(Z) = \frac{x(\omega/\omega_{res}, Q)}{x(1, Q)} \cdot \frac{x(1, Q_{ref})}{x(\omega/\omega_{res}, Q_{ref})} - 1,$$

wobei $X(\omega/\omega_{res}, Q)$ die beobachtete Amplitude bei einer Kreisfrequenz $\omega$ und einer Güte Q ist. $Q_{ref}$ bezeichnet die Güte bei der Ermittlung des Referenzwerts des Zustandsparameters Z. Die Werte für die Güte Q entsprechen jenen in Fig 2a, wobei die Kurve in Fig. 2a mit dem höchsten Resonanzpeak dem Referenzzustand entspricht. Dem entsprechend gilt für beide Kurven in Fig. 2b $Q_{ref} = 10$, und Q = 6 für die durchgezogene Linie und Q = 8 für die gestrichelte Linie. Es ist zwischen $1,1 < \omega/\omega_{res} < 1,3$ noch eine schwache Frequenzabhängigkeit von D zu erkennen, die aber für große Q vernachlässigbar ist. Insofern als Z und D stark mit Q variieren sind dies geeignete Funktionen um Veränderungen der Güte Q zu überwachen.

Fig. 2c zeigt schließlich Kurven der obigen Funktion D (Z(Q)), wobei in diesem Diagramm Q die unabhängige Variable ist, deren Veränderung überwacht werden soll. Das Kreisfrequenzverhältnis wurde hier auf $\omega/\omega_{res} = 1,15$ festgesetzt. Für den Referenzzustand $Z_{ref}$ wurden hier Güten von $Q_{ref} = 10000$, 8000 und 6000 angesetzt. Die jeweilige Abweichungsfunktion D(Z) hat dem entsprechend einen von Null abweichenden Wert, wenn sich die Güte des Oszillators verändert. Wenn im Messbetrieb die Abweichungsfunktion D(Z) Werte außerhalb des Bereichs annimmt, dessen Grenzwerte durch die horizontalen strichpunktierten Linien angedeutet sind, wird dies als signifikante Veränderung des Zustandsparameters Z bewertet und entsprechend signalisiert.

Nach dem Einbau eines Coriolis-Massedurchflussmessaufnehmers bzw. Dichtemessaufnehmers in eine Messstelle und dessen Inbetriebnahme werden hinsichtlich des erfindungsgemäßen Verfahrens zunächst Referenzwerte eines Zustandsparameters Z für verschiedene Wertebereiche eines physikalischen Parameters bzw. Felder einer Wertebereichsmatrix verschiedener physikalischer Parameter gebildet, wobei die physikalischen Parameter, wie Dichte, Temperatur und Druck Randbedingungen für den Betrieb der Messstelle definieren. Aktuell ermittelte Werte des Zustandsparameters Z werden in Abhängigkeit von jeweils gegebenen Werten eines oder mehrerer physikalischen Parameter einem Wertebereich oder einem Feld in einer Wertebereichsmatrix zugeordnet.

Im einfachsten Fall wird der erste Wert des Zustandsparameters, der einem Wertebereich bzw. einem Feld einer Wertebereichsmatrix zugeordnet ist, als Referenzwert für den Wertebereich bzw. das Feld der Wertebereichsmatrix erfasst. Alternativ dazu werden jeweils die N ersten Werte des Zustandsparameters Z, die einem Wertebereich oder einem Feld in einer Wertebereichsmatrix zugeordnet werden, zur Bildung des Referenzwerts gespeichert, wobei dann ein Mittelwert mit zugehöriger Standardabweichung berechnet werden und als Referenzwert für den Wertebereich bzw. das Feld der Wertebereichsmatrix gespeichert werden.

Für das erfindungsgemäße Verfahren ist es von Vorteil, wenn die Wertebereiche bzw. Felder der Wertebereichsmatrix nicht zu klein sind, da sonst die Zahl der Felder der Wertebereichsmatrix sehr groß werden kann. So erscheinen beispielsweise Temperaturwertebereiche angemessen, die jeweils 10 K überdecken. Für die Dichte können beispielsweise Wertebereiche gewählt werden die jeweils 100 kg/m³ überdecken. Für den Mediendruck erscheinen Wertebereiche geeignet, die beispielsweise jeweils 1 MPa überdecken. Die Breite der Wertebereiche eines Parameters, kann der der Einfachheit gleich groß sein. Wenn jedoch absehbar ist, dass der Zustandsparameter für bestimmte Wertebereiche der physikalischen Parameter starke Veränderungen erwarten lässt, beispielsweise bei hohen Temperaturen und/oder hohen Druckwerten, kann die Breite der Wertebereiche entsprechend reduziert werden.

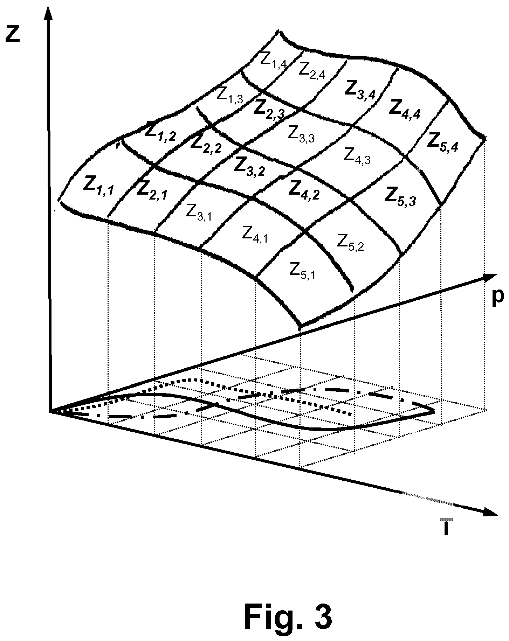

Anhand von Fig. 3 soll ein weiterer Aspekt zur Ermittlung von Referenzwerten $Z_{i,j}$ eines Zustandsparameters für eine Wertebereichsmatrix zweier physikalischer Parameter, hier der Temperatur T und des Drucks p erläutert werden. An der Messstelle kann ein Relativdruck zwischen beispielsweise 0 und 8 MPa auftreten. Dieser Druckbereich ist in vier Wertebereiche eingeteilt. Die Medientemperatur kann beispielsweise zwischen 20 °C und 140 °C betragen, dieser Temperaturbereich ist in fünf Wertebereiche eingeteilt. Die Messstelle ist in einem Batch-Prozess eingesetzt, bei dem zunächst ausgehend von Atmosphärendruck und Raumtemperatur die Temperatur und der Druck entlang der durchgezogenen Trajektorie auf beispielsweise 130 °C bzw. 7 MPa erhöht werden. Anschließend verläuft der Batch-Prozess entlang der strichpunktierten Trajektorie zurück auf Raumtemperatur. Bei jedem Durchlauf des Prozesses können nun Werte für die Zustandsparameter Z für von den Trajektorien durchlaufenen Feldern der Wertebereichmatrix durch Messung ermittelt werden. Daher stehen alsbald nach der Inbetriebnahme Referenzwerte $Z_{i,j}$ des Zustandsparameters für die entsprechenden Felder der Wertebereichmatrix zur Verfügung, und sind in der Grafik kursiv und fett dargestellt. Die Überwachung des Zustands des Messrohrs kann daher bei jedem Durchlauf des Batch-Prozess durch Vergleichen aktueller Werte des Zustandsparameters eines Tupels mit dem jeweiligen Referenzwert erfolgen. Die in normaler Schrift dargestellten Referenzwerte $Z_{i,j}$ können jedoch nicht zeitnah nach der Inbetriebnahme der Messstelle durch Messen ermittelt werden, da die entsprechenden Felder der Wertebereichmatrix bei der beschriebenen Prozessführung nicht vorkommen. Wenn zu einem späteren Zeitpunkt ein modifizierter Batch-Prozess betrieben wird der entlang der punktiert dargestellten Trajektorie verläuft, dann ist eine Zustandsüberwachung auf Basis gemessener Referenzwerte $Z_{i,j}$ nur noch eingeschränkt möglich. Für diesen Fall können die fehlenden Referenzwerte durch Interpolation bzw. Extrapolation gemessener Referenzwerte $Z_{i,j}$ berechnet und den Feldern der Wertebereichmatrix zugeordnet werden.

Neben der Ermittlung der Referenzwerte, sind zur Durchführung des Verfahrens noch Kriterien zu etablieren, welche bei dem Vergleich festgestellten Abweichungen zu welchem Befund führen. Insbesondere also, ab welcher Abweichung vom Referenzwert ein Fehlerzustand festzustellen und ggf. zu signalisieren ist. Hier gibt es eine Vielfalt von Ansätzen, wie das Vielfache der Standardabweichung eines Referenzwerts, beispielsweise das Zweifache oder Dreifache, ein Prozentsatz des Referenzwerts beispielsweise 8%, 4%, 2% oder 1%.

Es ist vorteilhaft, wenn ein Anlagenbetreiber die Grenzwerte selbst definieren kann. Beispielsweise kann anhand einer Veränderung eines Zustandsparameters ein Reinigungsbedarf indiziert werden. Nach einigen Betriebszyklen mit einer Reinigung des Messrohrs, ist die Erfahrungsbasis ausreichend, um den Grenzwert so festzulegen, dass der Reinigungsbedarf nicht zu früh und nicht zu spät signalisiert wird.

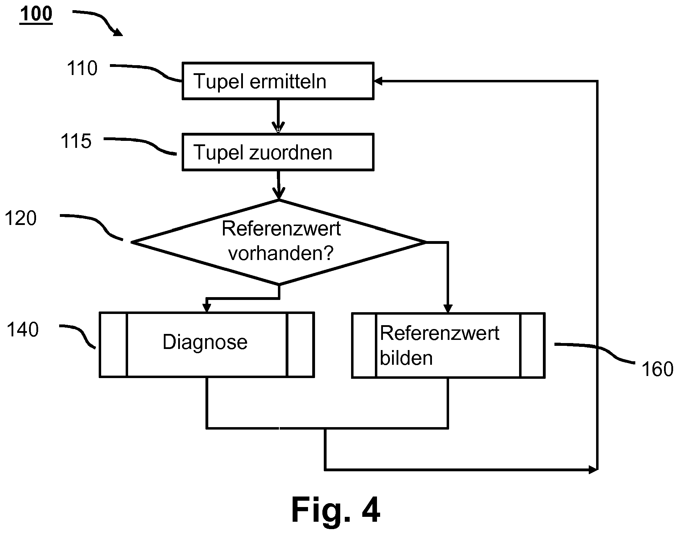

In Fig. 4 ist das erfindungsgemäße Verfahren 100 zusammenfassend dargestellt:

In einem ersten Schritt 110 werden Tupel eines Zustandsparameters und mindestens eines physikalischen Parameters ermittelt und anschließend einem Wertebereich des physikalischen Parameters, bzw. einem Feld einer Wertebereichmatrix mehrerer physikalischer Parameter zugeordnet (115).

In einer Abfrage 120 wird geprüft, ob für den Wertebereich des physikalischen Parameters, bzw. das Feld der Wertebereichmatrix mehrerer physikalischer Parameter bereits ein Referenzwert vorhanden ist, wenn ja, folgt eine Diagnose 140 durch Vergleich mit dem Referenzwert, anderenfalls das Bilden eines Referenzwerts 160 in der oben beschriebenen Weise.

## Patentansprüche

1. Verfahren (100) zum Überwachen eines Zustands eines in einer Messstelle installierten Messaufnehmers zum Erfassen der Dichte und/oder des Massedurchflusses eines Mediums mit mindestens einem zu Vibrationsschwingungen angeregten Oszillator, der mindestens ein Messrohr zum Führen des Mediums aufweist, wobei ein den Zustand charakterisierender Zustandsparameter von mindestens einem weiteren physikalischen Parameter des im Messrohr geführten Mediums bzw. des Oszillators abhängt; wobei das Verfahren umfasst:

Ermitteln (110) von Tupeln die einen Wert des mindestens einen physikalischen Parameters und einen zugehörigen Wert des Zustandsparameters enthalten;
Zuordnen (115) der Tupel zu jeweils einem Wertebereich des mindestens einen physikalischen Parameters; und
Bilden (160) eines Referenzwerts ($Z_{i,j}$) des Zustandsparameters für diesen Wertebereich des mindestens einen physikalischen Parameters unter Verwendung des Werts des Zustandsparameters des Tupels, wenn noch kein gültiger Referenzwert des Zustandsparameters für diesen Wertebereich vorliegt; oder
Vergleichen (140) des Werts des Zustandsparameters des Tupels mit dem Referenzwert, wenn ein Referenzwert des Zustandsparameters für diesen Wertebereich vorliegt; und Generieren eines Befunds in Abhängigkeit vom Ergebnis des Vergleichs,

wobei der Zustandsparameter von mindestens drei physikalischen Parametern des im Messrohr geführten Mediums abhängt, insbesondere der Temperatur, der Dichte und dem Druck des Mediums;

wobei die ermittelten Tupel jeweils aktuelle Werte von mindestens zwei der physikalischen Parameter und einen zugehörigen aktuellen Wert des Zustandsparameters umfassen;

wobei die Tupel einem Feld in einer Wertebereichmatrix der mindestens zwei der physikalischen Parameter, insbesondere Dichte und Temperatur zugeordnet werden;

wobei das Bilden des Referenzwerts des Zustandsparameters für dieses Feld der Wertebereichmatrix erfolgt, wenn noch kein gültiger Referenzwert des Zustandsparameters für dieses Feld vorliegt;

wobei das Vergleichen des Werts des Zustandsparameters des Tupels mit dem Referenzwert erfolgt, wenn ein Referenzwert des Zustandsparameters für dieses Feld vorliegt;

wobei ein Verhältnis einer Schwingungsamplitude des Oszillators zu einem Erregersignal zum Anregen der Schwingungen des Oszillators bei mindestens einer Überwachungsfrequenz in die Bestimmung des Zustandsparameters eingeht, wobei das Verhältnis zwischen der Überwachungsfrequenz und einer aktuellen Resonanzfrequenz des Oszillators, insbesondere der Resonanzfrequenz einer Biegeschwingungsnutzmode durch einen konstanten Faktor gegeben ist.

2. Verfahren nach Anspruch 1, wobei der Zustandsparameter von mindestens drei physikalischen Parametern des im Messrohr geführten Mediums abhängt, insbesondere der Temperatur, der Dichte und dem Druck des Mediums;

wobei die ermittelten Tupel jeweils aktuelle Werte mindestens der drei physikalischen Parameter und einen zugehörigen aktuellen Wert des Zustandsparameters umfassen;

wobei die Tupel einem Feld in einer mindestens dreidimensionalen Wertebereichmatrix der mindestens drei physikalischen Parameter zugeordnet werden.

3. Verfahren nach einem der vorhergehenden Ansprüche, wobei die gültigen Referenzwerte des Zustandsparameters für jeweils einen Wertebereich bzw. ein Feld der Wertebereichmatrix, dem ersten erfassten Wert des Zustandsparameters für diesen Wertebereich bzw. dieses Feld entsprechen.

4. Verfahren nach einem der vorhergehenden Ansprüche, wobei die gültigen Referenzwerte des Zustandsparameters für jeweils einen Wertebereich bzw. ein Feld der Wertebereichmatrix, durch Mittelung über N erste Werte des Zustandsparameters für diesen Wertebereich bzw. dieses Feld gebildet werden.

5. Verfahren nach Anspruch 4, wobei neben dem Referenzwert jeweils ein Maß für die Streuung der ersten N Werte des Zustandsparameters erfasst wird, beispielsweise deren Standardabweichung, und wobei zum Generieren eines Befunds in Abhängigkeit vom Ergebnis des Vergleichs eine Abweichung des aktuellen Werts des Zustandsparameters von dem Referenzwert mit der Streuung, insbesondere der Standardabweichung verglichen wird.

6. Verfahren nach einem der vorhergehenden Ansprüche, wobei die Wertebereiche für die Temperatur jeweils nicht weniger als 5 K, insbesondere nicht weniger als 10 K überdecken.

7. Verfahren nach einem der vorhergehenden Ansprüche, wobei die Wertebereiche für die Dichte des Mediums jeweils nicht weniger als 50 kg / m$^3$, insbesondere nicht weniger als 100 kg / m$^3$ überdecken.

8. Verfahren nach einem der vorhergehenden Ansprüche, wobei die Wertebereiche für den Druck des Mediums jeweils nicht weniger als 0,5 MPa insbesondere nicht weniger als 1 MPa überdecken.

9. Verfahren nach einem der vorhergehenden Ansprüche, wobei der Zustandsparameter dazu eingerichtet ist, auf Ansatzbildung, Abrasion, und oder Korrosion zu reagieren.

10. Verfahren nach einem der vorhergehenden Ansprüche, wobei der mindestens eine Zustandsparameter von der Güte des mindestens einen Oszillators abhängt.

11. Verfahren nach einem der vorhergehenden Ansprüche, wobei der mindestens eine Zustandsparameter von mindestens einer modalen Biegesteifigkeit des mindestens einen Oszillators abhängt.

12. Verfahren nach einem der vorhergehenden Ansprüche, wobei der Zustandsparameter von der Linienbreite einer Biegeschwingungsmode des Oszillators insbesondere der Biegeschwingungsnutzmode Oszillators bzw. der Funktion d$\omega$/d$\varphi$ abhängt.

## Claims

1. A method (100) for monitoring a state of a sensor installed in a measuring point for detecting the density and/or the mass flow of a medium with at least one oscillator which has been made to vibrate, said oscillator having at least one measuring tube for conducting the medium, wherein a state parameter which characterizes the state depends on at least one other physical parameter of the medium being conducted in the measuring tube, or of the oscillator; wherein the method comprises:

   Determining (110) tuples which contain a value of the at least one physical parameter and an associated value of the state parameter; assigning (115) each tuple to a range of values of the at least one physical parameter; and forming (160) a reference value ($Z_{i,i}$) of the state parameter for this range of values of the at least one physical parameter, using the value of the state parameter of the tuple, if a valid reference value of the state parameter is not yet available for this range of values; or comparing (140) the value of the state parameter of the tuple with the reference value, if a reference value of the state parameter is available for this range of values; and generating findings based on the result of the comparison, wherein the state parameter depends on at least three physical parameters of the medium conducted in the measuring tube, in particular on the temperature, density, and pressure of the medium; wherein each determined tuple comprises current values of at least two of the physical parameters and an associated value of the state parameter; wherein the tuples are assigned to a field in a value range matrix of the at least two of the physical parameters, in particular density and temperature; wherein the reference value of the state parameter is formed for this field of the value range matrix, if no valid reference value of the state parameter is available for this field; wherein the value of the state parameter of the tuple is compared with the reference value, if a reference value of the state parameter is available for this field; wherein a ratio of a vibration amplitude of the oscillator to an exciter signal for initiating oscillator vibrations at at least one monitoring frequency is taken into consideration when determining the state parameter, wherein the ratio between the monitoring frequency and a current resonant frequency of the oscillator, in particular the resonant frequency of a bending vibration useful mode, is given by a constant factor.

2. The method as claimed in claim 1, wherein the state parameter depends on at least three physical parameters of the medium conducted in the measuring tube, in particular on the temperature, density, and pressure of the medium;

   wherein each determined tuple comprises current values of at least the three physical parameters and an associated value of the state parameter;
   wherein the tuples are assigned to a field in an at least three-dimensional value range matrix of the at least three physical parameters.

3. The method as claimed in one of the preceding claims, wherein the valid reference values of the state parameter for a range of values or a field in the value range matrix correspond to the first recorded value of the state parameter for this range of values or this field.

4. The method as claimed in one of the preceding claims, wherein the valid reference values of the state parameter for a range of values or for a field of the value range matrix are formed by averaging N first values of the state parameter for this range of values or this field.

5. The method as claimed in claim 4, wherein in addition to the reference value, a measure of the dispersion of the first N values of the state parameter is recorded, for example their standard deviation, and wherein a deviation of the current value of the state parameter from the reference value is compared with the dispersion, in particular compared with the standard deviation, in order to generate findings based on the result of the comparison.

6. The method as claimed in one of the preceding claims, wherein the ranges of values for the temperature cover no less than 5 K, in particular no less than 10 K.

7. The method as claimed in one of the preceding claims, wherein the ranges of values for the density of the medium cover no less than 50 kg/m3, in particular no less than 100 kg/m3.

8. The method as claimed in one of the preceding claims, wherein the ranges of values for the pressure of the medium cover no less than 0.5 MPa, in particular no less than 1 MPa.

9. The method as claimed in one of the preceding claims, wherein the state parameter is designed to react to build-up, abrasion and/or corrosion.

10. The method as claimed in one of the preceding claims, wherein the at least one state parameter depends on the quality of the at least one oscillator.

11. The method as claimed in one of the preceding claims, wherein the at least one state parameter depends on at least one modal bending stiffness of the at least one oscillator.

12. The method as claimed in one of the preceding claims, wherein the state parameter depends on the line width of a bending vibration mode of the oscillator, in particular the bending vibration useful mode of the oscillator or the function dm/dcp.

**Revendications**

1. Procédé (100) destiné à la surveillance d'un état d'un capteur installé dans un point de mesure et destiné à mesurer la densité et/ou le débit massique d'un produit avec au moins un oscillateur excité en vibrations, lequel capteur présente au moins un tube de mesure pour guider le produit, un paramètre d'état caractérisant l'état dépendant d'au moins un autre paramètre physique du produit guidé dans le tube de mesure ou de l'oscillateur ; lequel procédé comprend les étapes suivantes :

Détermination (110) de tuples contenant une valeur de l'au moins un paramètre physique et une valeur correspondante du paramètre d'état ;
Attribution (115) des tuples respectivement à une gamme de valeurs de l'au moins un paramètre physique ; et
Formation (160) d'une valeur de référence ($Z_{i,j}$) du paramètre d'état pour cette gamme de valeurs de l'au moins un paramètre physique en utilisant la valeur du paramètre d'état du tuple s'il n'existe pas encore de valeur de référence valable du paramètre d'état pour cette gamme de valeurs ; ou
Comparaison (140) de la valeur du paramètre d'état du tuple à la valeur de référence lorsqu'une valeur de référence du paramètre d'état est disponible pour cette gamme de valeurs ; et génération d'un résultat en fonction du résultat de la comparaison,
le paramètre d'état dépendant d'au moins trois paramètres physiques du produit guidé dans le tube de mesure, notamment la température, la densité et la pression du produit ;
les tuples déterminés comprenant chacun des valeurs actuelles d'au moins deux des paramètres physiques et une valeur actuelle correspondante du paramètre d'état ;

les tuples étant associés à un champ dans une matrice de gammes de valeurs des au moins deux des paramètres physiques, notamment la densité et la température ;
la formation de la valeur de référence du paramètre d'état pour ce champ de la matrice de gammes de valeurs s'effectuant lorsqu'il n'existe pas encore de valeur de référence valable du paramètre d'état pour ce champ ;
la comparaison de la valeur du paramètre d'état du tuple avec la valeur de référence étant effectuée lorsqu'une valeur de référence du paramètre d'état est disponible pour ce champ ;
un rapport entre une amplitude de vibration de l'oscillateur et un signal d'excitation pour générer les vibrations de l'oscillateur à au moins une fréquence de surveillance étant intégré dans la détermination du paramètre d'état, le rapport entre la fréquence de surveillance et une fréquence de résonance actuelle de l'oscillateur, notamment la fréquence de résonance d'un mode utile de vibration de flexion, étant défini par un facteur constant.

2. Procédé selon la revendication 1, pour lequel le paramètre d'état dépend d'au moins trois paramètres physiques du produit guidé dans le tube de mesure, notamment la température, la densité et la pression du produit ;

les tuples déterminés comprenant chacun des valeurs actuelles d'au moins les trois paramètres physiques et une valeur actuelle correspondante du paramètre d'état ;
les tuples étant associés à un champ dans une matrice de gammes de valeurs au moins tridimensionnelle des au moins trois paramètres physiques.

3. Procédé selon l'une des revendications précédentes, pour lequel les valeurs de référence valables du paramètre d'état pour respectivement une gamme de valeurs ou un champ de la matrice de gammes de valeurs correspondent à la première valeur saisie du paramètre d'état pour cette gamme de valeurs ou ce champ.

4. Procédé selon l'une des revendications précédentes, pour lequel les valeurs de référence valables du paramètre d'état pour respectivement une gamme de valeurs ou un champ de la matrice de gammes de valeurs sont formées par calcul de la moyenne sur N premières valeurs du paramètre d'état pour cette gamme de valeurs ou ce champ.

5. Procédé selon la revendication 4,

pour lequel, outre la valeur de référence, on saisit respectivement une mesure pour la dispersion des N premières valeurs du paramètre d'état, par exemple leur écart-type, et

pour lequel, pour générer un résultat en fonction du résultat de la comparaison, on compare un écart de la valeur actuelle du paramètre d'état par rapport à la valeur de référence avec la dispersion, notamment l'écart-type.

6. Procédé selon l'une des revendications précédentes, pour lequel les gammes de valeurs pour la température ne recouvrent respectivement pas moins de 5 K, notamment pas moins de 10 K.

7. Procédé selon l'une des revendications précédentes, pour lequel les gammes de valeurs pour la densité du produit ne recouvrent pas moins de 50 kg / $m^3$ chacune, notamment pas moins de 100 kg / $m^3$.

8. Procédé selon l'une des revendications précédentes, pour lequel les gammes de valeurs pour la pression du produit ne recouvrent pas moins de 0,5 MPa chacune, notamment pas moins de 1 MPa.

9. Procédé selon l'une des revendications précédentes, pour lequel le paramètre d'état est adapté pour réagir à la formation de dépôts, à l'abrasion, et/ou à la corrosion.

10. Procédé selon l'une des revendications précédentes, pour lequel l'au moins un paramètre d'état dépend de la qualité de l'au moins un oscillateur.

11. Procédé selon l'une des revendications précédentes, pour lequel l'au moins un paramètre d'état dépend d'au moins une rigidité modale à la flexion de l'au moins un oscillateur.

12. Procédé selon l'une des revendications précédentes, pour lequel le paramètre d'état dépend de la largeur de ligne d'un mode de vibration de flexion de l'oscillateur, notamment du mode utile de vibration de flexion de l'oscillateur ou de la fonction $d\omega/d\varphi$.

**Fig. 1**

**Fig. 2a**

**Fig. 2b**

**Fig. 2c**

Fig. 3

**Fig. 4**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2007028663 A1
- DE 60218050 T2
- WO 03029760 A1
- DE 102011086395 A1
- WO 2013072164 A1
- DE 102010000759 A1